Europäisches Patentamt

European Patent Office

Office européen des brevets

(19)

(11) EP 0 936 462 A2

(12) **EUROPÄISCHE PATENTANMELDUNG**

(43) Veröffentlichungstag:
18.08.1999 Patentblatt 1999/33

(51) Int. Cl.$^6$: **G01N 27/22**

(21) Anmeldenummer: 99102582.6

(22) Anmeldetag: 11.02.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **17.02.1998 DE 19806477**

(71) Anmelder:
**Deutsches Zentrum für Luft- und Raumfahrt e.V.
53175 Bonn (DE)**

(72) Erfinder: **Zunft, Stefan
70195 Stuttgart (DE)**

(74) Vertreter:
**Hoeger, Stellrecht & Partner
Uhlandstrasse 14 c
70182 Stuttgart (DE)**

(54) **Verfahren und Messvorrichtung zur Bestimmung des volumetrischen Gasgehalts**

(57) Um ein Verfahren zur Ermittlung des volumetrischen Gasgehalts in einer eine Gasphase und eine Flüssigphase umfassenden Zweiphasenströmung eines Mediums mit unbekannter Strömungsform, zur Verfügung zu stellen, bei welchem mit möglichst einfacher Meßtechnik möglichst zuverlässige Messungen durchführbar sind, wird vorgeschlagen, daß die Zweiphasenströmung durch Verwirbelung der Gasphase und der Flüssigphase in eine Tröpfchenströmung umgewandelt wird und daß in der Tröpfchenströmung die Bestimmung des volumetrischen Gasgehalts erfolgt.

FIG.1

**Beschreibung**

Die Erfindung betrifft ein Verfahren und eine Meßvorrichtung zur Ermittlung des volumetrischen Gasgehalts in einer eine Gasphase und eine Flüssigphase umfassenden Zweiphasenströmung eines Mediums mit unbekannter Strömungsform.

In einer Vielzahl von Fällen in der Verfahrenstechnik, beispielsweise der Kraftwerkstechnik, besteht die Notwendigkeit, bei Zweiphasenströmungen den volumetrischen Gasgehalt zu bestimmen.

Insbesondere in der Kraftwerkstechnik wird vielfach mit Zweiphasenströmungen, umfassend Wasser und Wasserdampf, gearbeitet, wobei es wichtig ist, den volumetrischen Dampfgehalt dieser Zweiphasenströmung exakt zu bestimmen.

Die bislang bekannten Verfahren basieren auf der Absorption oder Streuung radioaktiver Strahlung, wie beispielsweise $\gamma$-, Röntgen- oder Neutronenstrahlung. Es sind aber auch Impedanzverfahren, beispielsweise Kapazitätsmeßverfahren, bekannt, die zwar hinsichtlich des apparativen Aufwandes und ihrer Ansprechgeschwindigkeit vorteilhaft sind, jedoch aufgrund der unbekannten Strömungsform der Zweiphasenströmung erhebliche Meßungenauigkeiten mit sich bringen.

Allen bislang bekannten Verfahren gemeinsam ist jedoch die Problematik, daS die nicht bekannte und nicht sinnvoll feststellbare Strömungsform, das heißt die unbekannte örtliche Verteilung der Flüssigphase relativ zur Gasphase signifikanten Einfluß auf das Meßergebnis hat und somit das Meßergebnis stets mit erheblichen Fehlern behaftet ist.

Der Erfindung liegt daher die Aufgabe zugrunde, ein Verfahren und eine Meßvorrichtung zur Verfügung zu stellen, bei welcher mit möglichst einfacher Meßtechnik möglichst zuverlässige Messungen durchführbar sind.

Diese Aufgabe wird bei einem Verfahren der eingangs beschriebenen Art erfindungsgemäß dadurch gelöst, daß die Zweiphasenströmung durch Verwirbelung der Gasphase und der Flüssigphase in eine Tröpfchenströmung umgewandelt wird und daß in der Tröpfchenströmung die Bestimmung des volumetrischen Gasgehalts erfolgt.

Der Vorteil der erfindungsgemäßen Lösung ist darin zu sehen, daß die Zweiphasenströmung mit unbekannter Strömungsform der Gasphase und der Flüssigkeitsphase in eine Zweiphasenströmung in Form einer Tröpfchenströmung umgewandelt wird und durch diese Tröpfchenströmung nunmehr die Möglichkeit einer einfachen Bestimmung des volumetrischen Gasgehalts möglich ist, da die unbekannte Strömungsform in eine bekannte Strömungsform, nämlich die Tröpfchenströmung, überführt wurde.

Somit wird erfindungsgemäß eine definierte Strömungsform zwangsweise erzeugt und außerdem kann bei der Tröpfchenströmung für die Bestimmung des volumetrischen Gasgehalts von einer im wesentlichen homogenen Verteilung der Flüssigphase in der Gasphase ausgegangen werden, so daß sämtliche Ungenauigkeiten, die durch die bisher ein Problem darstellende unbekannte Strömungsform bedingt waren, entfallen und ein einfacher Modellzusammenhang - beispielsweise quasihomogenes Modell - zwischen der direkt gemessenen Größe und dem volumetrischen Gasgehalt besteht.

Die Tröpfchenströmung hat andererseits den Vorteil, daß in dieser davon ausgegangen werden kann, daß der Schlupf, das heißt der Quotient aus der Geschwindigkeit der Gasphase und der Geschwindigkeit der Flüssigphase als ungefähr eins angesetzt werden kann, da sich die Tröpfchen mit derselben Geschwindigkeit wie die Gasphase in Strömungsrichtung bewegen. Damit kann ein rechnerischer Zusammenhang zu dem in der Praxis häufig gesuchten, auf den Massenstrom bezogenen Strömungsgasgehalt hergestellt werden, ohne daß empirische und meist recht grobe Schlupfmodelle erforderlich sind.

Rein prinzipiell wäre es bei der erfindungsgemäßen Lösung denkbar, den volumetrischen Gasgehalt nach wie vor mit einem Verfahren zu bestimmen, welches auf Absorption oder Streuung radioaktiver Strahlung basiert. Auch bei einer derartigen Messung wäre die erfindungsgemäße Lösung aufgrund des nicht mehr vorhandenen Schlupfs und der homogenen Verteilung der Flüssigphase in der Gasphase von Vorteil.

Eine besonders günstige Lösung sieht jedoch vor, daß die Bestimmung des volumetrischen Gasgehalts mittels einer Kapazitätsmessung durchgeführt wird. Eine Kapazitätsmessung hat den Vorteil der apparativen Einfachheit der Meßanordnung im Gegensatz zu den Verfahren, die mit Absorption oder Streuung radioaktiver Strahlung arbeiten. Darüber hinaus hat eine Kapazitätsmessung noch den weiteren Vorteil, daß im Fall der erfindungsgemäß eingesetzten Tröpfchenströmung quasihomogene Modelle für eine effektive Permittivitätszahl des Zweiphasendielektrikums herangezogen werden können, um den Zusammenhang zwischen der gemessenen Kondensatorkapazität und dem volumetrischen Gasgehalt oder Dampfgehalt der Zweiphasenströmung herzustellen.

Eine besonders günstige Lösung sieht ferner vor, daß zur Kapazitätsmessung die effektive Permittivitätszahl von mehr als der Hälfte der gesamten Tröpfchenströmung bestimmt wird, das heißt, daß bei der Messung der Kapazität mehr als die Hälfte der Tröpfchenströmung erfaßt wird und somit im Gegensatz zu den mit Absorption oder Streuung radioaktiver Strahlung arbeitenden Verfahren, ein wesentlicher Teil der Tröpfchenströmung herangezogen wird.

Noch vorteilhafter ist es, wenn bei der Kapazitätsmessung im wesentlichen die gesamte Tröpfchenströmung herangezogen wird, so daß selbst noch innerhalb der Tröpfchenströmung vorliegende Inhomogenitäten durch Heranziehen der im wesentlichen gesamten Tröpfchenströmung ausgemittelt werden.

Die Kapazitätsmessung könnte rein prinzipiell mittels einer Kapazitätsmeßanordnung durchgeführt werden, bei welcher die Tröpfchenströmung ein elektrisches Feld einer Kondensatoranordnung durchsetzt.

Eine hinsichtlich der Meßtechnik bessere Lösung sieht jedoch vor, daß die Tröpfchenströmung in Teile aufgeteilt wird und daß die Teile jeweils durch einen Kondensator hindurchgeführt werden.

Beispielsweise könnten die Kondensatoren so angeordnet sein, daß die Feldlinien derselben alle im wesentlichen parallel verlaufen, das heißt die mehreren Kondensatoren wären schichtweise gestapelt. Besonders günstig ist es jedoch, wenn die Kondensatoren radial zu einer Mittelachse verlaufende Felder aufweisen und aus Ringelektroden aufgebaut sind.

Eine besonders günstige Kapazitätsmeßanordnung sieht dabei vor, daß die Kondensatoren durch einen Satz von ineinander mit jeweils zunehmend kleineren Radien angeordneter Ringelektroden gebildet werden, die somit einen Satz von ringförmigen Zwischenräumen bilden, durch welche dann die Zweiphasenströmung in Richtung parallel zu einer Mittelachse hindurchtreten kann.

Hinsichtlich der Erzeugung der Tröpfchenströmung wurden im Zusammenhang mit der bisherigen Erläuterung der einzelnen Ausführungsbeispiele keine näheren Angaben gemacht. So sieht ein vorteilhaftes Ausführungsbeispiel vor, daß zur Erzeugung der Tröpfchenströmung ein Mischer eingesetzt wird.

Ein derartiger Mischer ist vorzugsweise so ausgebildet, daß bei diesem mittels Strömungsleitschaufeln die Flüssigphase in Tröpfchen aufgelöst wird, wobei diese Strömungsleitschaufeln vorzugsweise eine randseitige, die Gasphase mindestens teilweise umgebende Strömung der Flüssigphase in Richtung einer Mittelachse ablenken und damit in Tröpfchen auflösen.

Die eingangs genannte Aufgabe wird darüber hinaus noch bei einer Meßvorrichtung zur Ermittlung des volumetrischen Gasgehalts in einer eine Gasphase und eine Flüssigphase umfassenden Zweiphasenströmung eines Mediums unbekannter Strömungsform erfindungsgemäß dadurch gelöst, daß die Meßvorrichtung einen Mischer aufweist, welcher die Zweiphasen-Strömung durch verwirbelung der Gasphase und der Flüssigphase in eine Tröpfchenströmung umwandelt und daß auf den Mischer folgend eine Meßanordnung zur Bestimmung des volumetrischen Gasgehalts der Tröpfchenströmung angeordnet ist.

Besonders vorteilhaft ist es hierbei, wenn die Meßanordnung eine Kapazitätsmeßanordnung aufweist, mit welcher eine effektive Permittivitätszahl der ein Zweiphasendielektrikum darstellenden Tröpfchenströmung meßbar ist.

Eine besonders günstige Lösung sieht dabei vor, daß die Kapazitätsmeßanordnung so angeordnet ist, daß diese von mehr als der Hälfte der Tröpfchenströmung durchströmt wird.

Noch besser ist es, wenn die Kapazitätsmeßanordnung von der gesamten Tröpfchenströmung durchströmt ist.

Hinsichtlich der Ausbildung der Kapazitätsmeßanordnung ist es besonders günstig, wenn die Kapazitätsmeßanordnung nicht nur einen Kondensator, sondern mehrere parallel geschaltete Kondensatoren aufweist und jeweils unterschiedliche Teile der Tröpfchenströmung einen der Kondensatoren durchströmen.

Hinsichtlich der Anordnung der Felder in derartigen Kondensatoren sind ebenfalls die unterschiedlichsten Aufbauten denkbar. Beispielsweise ist ein schichtweiser Aufbau denkbar, so daß die Feldlinien der einzelnen Kondensatoren im wesentlichen parallel zueinander verlaufen.

Eine noch vorteilhaftere Lösung sieht jedoch vor, daß die Kondensatoren durch einen Satz von in einer radialen Richtung zu einer Mittelachse aufeinanderfolgend angeordneten Ringelektroden gebildet sind.

Eine zweckmäßige Lösung sieht dabei vor, daß die aufeinanderfolgend angeordneten Ringelektroden einen sukzessiv kleineren Radius aufweisen und alle Ringelektroden koaxial zu der Mittelachse angeordnet sind.

Ferner sind die Ringelektroden, damit sie eine möglichst große Kapazität haben, so ausgebildet, daß sie sich in Strömungsrichtung über eine möglichst große Distanz erstrecken, so daß die Ringelektroden vorzugsweise die Form von Rohrzylindern aufweisen, die ineinander sitzen.

Zweckmäßigerweise sind die einzelnen Ringelektroden so miteinander verschaltet, daß diese parallel geschaltete Kondensatoren bilden, um somit die gesamte Kapazität aller Kondensatoren zur Messung der effektiven Permittivität der Tröpfchenströmung heranzuziehen.

Eine günstige Lösung dies zu erreichen sieht vor, daß jeweils übernächste Ringelektroden zusammengefaßt sind, so daß die Gesamtzahl der Ringelektroden so betrieben werden kann, daß die eine Menge von übernächsten miteinander elektrisch verbundenen Ringelektroden auf Masse liegt und die andere auf einem Meßpotential.

Es ist aber auch denkbar, zwei in Strömungsrichtung aufeinanderfolgend angeordnete Kondensatoranordnungen zu bilden, wobei, die beiden Kondensatoranordnungen im Gegentakt betrieben sind.

Der Vorteil einer derartigen Gegentaktschaltung ist darin zu sehen, daß damit Störungen, insbesondere die Einflüsse magnetischer Störfelder, ausgeglichen werden.

Vorzugsweise sind die beiden Kondensatorenanordnungen ebenfalls durch Sätze von Ringelektroden gebildet, wobei einander entsprechende Kondensatoren stets von denselben Teilen der Tröpfchenströmung durchströmt sind.

Hinsichtlich der Ausbildung des Mischers wurden ebenfalls im Zusammenhang mit der Erläuterung der einzelnen Ausführungsbeispiele keine näheren Angaben gemacht. So sieht ein vorteilhaftes Ausführungsbeispiel vor, daß der Mischer Strömungsleitschaufeln aufweist, die vorzugsweise randseitig eines Kanals fließende Flüssigphase ablösen und in Richtung der Mittelachse beschleunigen und Wirbel bilden, um die Flüssigphase durch Impulsaustausch zwischen den Phasen in Tröpfchen auflösen.

Alternativ oder ergänzend hierzu läßt sich eine Zweiphasen-Strömung auch durch eine Querschnittsverengung, insbesondere eine Venturidüse, in eine Tröpfchenströmung umwandeln, wobei durch die Erhöhung der Strömungsgeschwindigkeit ein verbesserter Impulsaustausch und somit eine verbesserte Verwirbelung erreichbar ist.

Eine besonders günstige Lösung könnte sogar vorsehen, die erfindungsgemäße Meßanordnung im Bereich einer Querschnittsverengung anzuordnen und somit in der Meßanordnung mit gegenüber einem üblichen Kanal- oder Rohrquerschnitt für die Zweiphasenströmung erhöhter Strömungsgeschwindigkeit zu arbeiten.

Diese Strömungsleitschaufeln sind vorzugsweise als Ausbiegungen aus einem Kanaleinsatz ausgebildet. Beispielsweise wäre es denkbar, den Kanaleinsatz als Einsatzrohr zu bilden, welcher die Strömungsleitschaufeln trägt.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:

Fig. 1    eine halbseitig im Schnitt gezeichnete Seitenansicht eines ersten Ausführungsbeispiels einer erfindungsgemäßen Meßvorrichtung;

Fig. 2    einen Schnitt längs Linie 2-2 in Fig. 1;

Fig. 3    einen Schnitt längs Linie 3-3 in Fig. 1;

Fig. 4    einen vergrößerten Schnitt ähnlich Fig. 1 durch eine Kapazitätsmeßanordnung eines zweiten Ausführungsbeispiels einer erfindungsgemäßen Meßvorrichtung und

Fig. 5    einen Verschaltungsplan der Kapazitätsmeßanordnung des zweiten Ausführungsbeispiels.

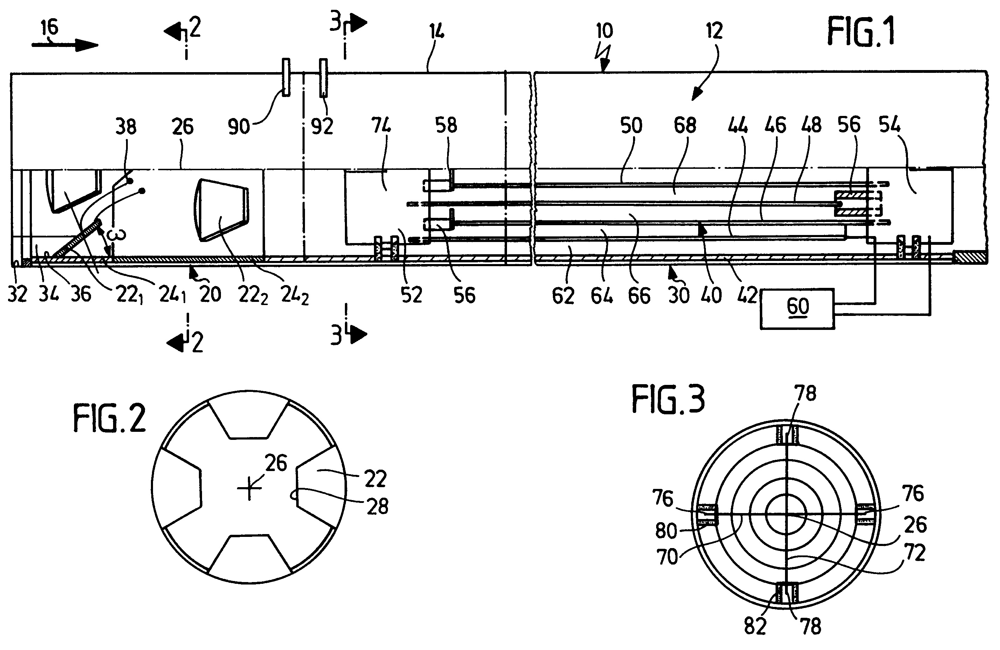

Ein in Fig. 1 dargestelltes und als Ganzes mit 10 bezeichnetes erstes Ausführungsbeispiel einer erfindungsgemäßen Meßvorrichtung, umfaßt einen Strömungskanal 12, beispielsweise gebildet durch einen Innenkanal eines Rohrs 14, in welchem eine eine Gasphase und eine Flüssigphase umfassende Zweiphasenströmung eines Mediums, beispielsweise Wasser und Wasserdampf eines Dampferzeugers, in einer Strömungsrichtung 16 strömt.

Die Meßvorrichtung umfaßt dabei einen als Ganzes mit 20 bezeichneten Mischer und eine stromabwärts des Mischers angeordnete und als Ganzes mit 30 bezeichnete Kapazitätsmeßanordnung.

Der Mischer 20 wird gebildet durch Strömungsleitschaufeln 22, welche beispielsweise als an einem Einsatz 24 um einen Winkel $\omega$ nach innen in Richtung einer Mittelachse 26 des Rohrs 14 ragende Leitblechsegmente gehalten sind, welche sich ungefähr über mehr als ein Drittel des Radius des Rohrs 14 in Richtung der Mittelachse 26 erstrecken, so daß deren Innenkanten 28 näher bei der Mittelachse 26 liegen.

Vorzugsweise sind zwei Sätze von in der Strömungsrichtung aufeinanderfolgend angeordneten Strömungsleitschaufeln $22_1$ und $22_2$ vorgesehen, die beide jeweils von einem Einsatz $24_1$ und $24_2$ radial nach innen abstehen, wobei beide Sätze von Strömungsleitschaufeln $22_1$ und $22_2$ gegeneinander verdreht sind.

Diese Strömungsleitschaufeln 22 dienen dazu, eine sich längs einer Innenwand 32 des Rohrs 14 in der Strömungsrichtung 16 bewegende Flüssigphase 34 insbesondere von einer Innenwand 36 des Einsatzes 24 abzulösen und in Richtung der Mittelachse 26 zu beschleunigen und Wirbel zu erzeugen, so daß die zunächst zumindest teilweise zusammenhängend strömende Flüssigphase 34 durch Impulsaustausch zwischen den Phasen in einzelne Tropfen 38 zerstäubt wird.

Damit tritt aus dem Mischer 20 die Zweiphasenströmung als Tröpfchenströmung aus und als solche in die Kapazitätsmeßanordnung 30 ein.

Die Kapazitätsmeßanordnung 30 umfaßt im einfachsten Fall des ersten Ausführungsbeispiels einen Satz 40 von um die Mittelachse 26 herum verlaufenden Ringelektroden, wobei eine erste Ringelektrode 42 ein Außenrohr bildet, welches an der Innenseite 32 des Rohrs 14 anliegt, die zweite Ringelektrode 44, die dritte Ringelektrode 46, die vierte Ringelektrode 48 und die fünfte Ringelektrode 50 jeweils als Rohrzylinder ausgebildet sind und mit ihren stromaufwärtigen und stromabwärtigen Seiten jeweils in Haltern 52 bzw. 54 zur Mittelachse 26 zentriert angeordnet sind.

Die Halter 52 und 54 dienen dabei gleichzeitig der Kontaktierung der einzelnen Ringelektroden 42 bis 50, wobei beispielsweise der Halter 52 die zweite Ringelektrode 44 und die vierte Ringelektrode 48 elektrisch miteinander verbindet, während der Halter 54 die erste Ringelektrode 42, die dritte Ringelektrode 46 und die fünfte Ringelektrode 50 elektrisch miteinander verbindet, beispielsweise im einfachsten Fall dadurch, daß der jeweilige Halter 52 bzw. 54 elektrisch leitend ausgebildet ist und die jeweils zu kontaktierende Ringelektrode elektrisch leitend mit dem jeweiligen Halter 52 bzw. 54 verbunden ist, während die nicht zu kontaktierende Ringelektrode über einen Isolationskörper 56 mit dem entsprechenden Halter 52 bzw. 54 verbunden und somit an diesem gehalten ist.

Ferner ist die fünfte Ringelektrode 50, die ebenfalls als Rohrzylinder ausgebildet ist, frontseitig, das heißt auf ihrer stromaufwärtigen Seite mit einem Deckel 58 verschlossen, so daß die gesamte Zweiphasenströmung, die als Tröpfchenströmung durch die Kapazitätsmeßanordnung 30 hindurchtritt, gezwungen ist, zwischen der ersten Ringelektrode 42 und der fünften Ringelektrode 50 hindurchzuströmen und somit die sich zwischen diesen ausbildenden elektrischen Felder mit radial zur Mittelachse 26 verlaufenden Feldlinien zu durchsetzen.

Eine Kapazitätsmeßeinrichtung 60, deren einer Ausgang beispielsweise mit der zweiten Ringelektrode 44 verbunden ist und deren anderer Ausgang mit dem Halter 54 und somit mit der ersten Ringelektrode 42, der dritten Ringelektrode 46 und der fünften Ringelektrode 50 elektrisch leitend verbunden ist, erzeugt somit in aufeinanderfolgenden Zwischenräumen 62, 64, 66, 68 zwischen der ersten Ringelektrode 42 und der zweiten Ringelektrode 44, der zweiten Ringelektrode 44 und der dritten Ringelektrode 46, der dritten Ringelektrode 46 und der vierten Ringelektrode 48 sowie der vierten Ringelektrode 48 und der fünften Ringelektrode 50 jeweils abwechselnd entgegengesetzt gerichtete elektrische Felder, die allerdings zu Feldern jeweils parallel geschalteter Kondensatoren gehören.

Wird beispielsweise der erste Zwischenraum 62 einem ersten Kondensator zugeordnet, so ist der zweite Zwischenraum 64 einem zweiten Kondensator, der dritte Zwischenraum 66 einem dritten Kondensator und der vierte Zwischenraum 68 einem vierten Kondensator zuzuordnen, deren Kapazität gleichzeitig von der Kapazitätsmeßeinrichtung 60 gemessen wird.

Aufgrund der Tatsache, daß die fünfte Ringelektrode 50 mittels des Deckels 58 verschlossen ist, wird nun die gesamte Tröpfchenströmung gezwungen, die Zwischenräume 62 bis 66 zu passieren und somit die gesamte Kapazitätsmeßanordnung 30, so daß durch Kapazitätsmessung mit der Kapazitätsmeßeinrichtung 60 die effektive Permittivität und damit der Tröpfchenanteil in der gesamten Tröpfchenströmung bestimmbar ist.

Vorzugsweise sind die Halter 52 und 54 so ausgebildet, daß sie, wie in Fig. 3 dargestellt, jeweils zwei Platten 70 und 72 aufweisen, welche mit ihrer jeweiligen Flachseite 74 parallel zur Strömungsrichtung 16 verlaufen und ungefähr einen rechten Winkel zwischen sich einschließen und sich außerdem in radialer Richtung zur Mittelachse 26 erstrecken. Die Platten 70 und 72 sind vorzugsweise im Bereich ihrer äußeren Enden 76 und 78 mittels Isolationskörpern 80 und 82 in dem die erste Ringelektrode 42 bildenden Außenrohr gehalten und somit auch elektrisch gegenüber diesem isoliert, so daß problemlos eine elektrisch leitende Verbindung zwischen der zweiten Ringelektrode 44 und der vierten Ringelektrode 48 herstellbar ist.

In gleicher Weise ist der Halter 54 ausgebildet, wobei dieser ebenfalls mittels Isolationskörpern im Außenrohr 42 gehalten ist, und über eine zusätzliche elektrisch leitende Verbindung ein elektrischer Kontakt zwischen der ersten Ringelektrode 42, der dritten Ringelektrode 46 und der fünften Ringelektrode 50 hergestellt ist.

Zur erfindungsgemäßen Bestimmung des volumetrischen Gasgehaltes der Zweiphasenströmung erfolgt vorzugsweise noch die Bestimmung einer Temperatur der Tröpfchenströmung mittels eines Temperatursensors 90 und eines Drucks derselben mittels eines Drucksensors 92. Durch Bestimmung der Kapazität der Kapazitätsmeßanordnung 30 mittels der Kapazitätsmeßeinrichtung 60 ist eine Bestimmung des volumetrischen Gasgehalts α der Zweiphasenströmung möglich, wie dies in dem Artikel von H. Auracher, Die Genauigkeit kapazitiver Verfahren zur Messung des volumetrischen Dampfgehalts in Zweiphasenströmungen, in der Zeitschrift Wärme- und Stoffübertragung 21, Seiten 355 bis 366 (1987) beschrieben ist. Der volumetrische Gasgehalt repräsentiert das Verhältnis der von der Gasphase durchströmten Querschnittsfläche zur Fläche des gesamten Strömungsquerschnitts.

Ausgehend von der Tatsache, daß aufgrund der Tröpfchenströmung der Schlupf in der Zweiphasenströmung zwischen der Flüssigphase und der Gasphase ungefähr gleich 1 ist, ist von folgendem Zusammenhang zwischen dem Gasmassenstromanteil $\dot{X}$ und dem volumetrischen Gasgehalt α auszugehen

$$1 = \frac{\dot{x}}{1-\dot{x}} \cdot \frac{1-\alpha}{\alpha} \cdot \frac{\rho f L}{\rho gas}.$$

Aufgrund dieses Zusammenhangs läßt sich somit der massenstrombezogene Gasgehalt der Zweiphasenströmung problemlos ermitteln.

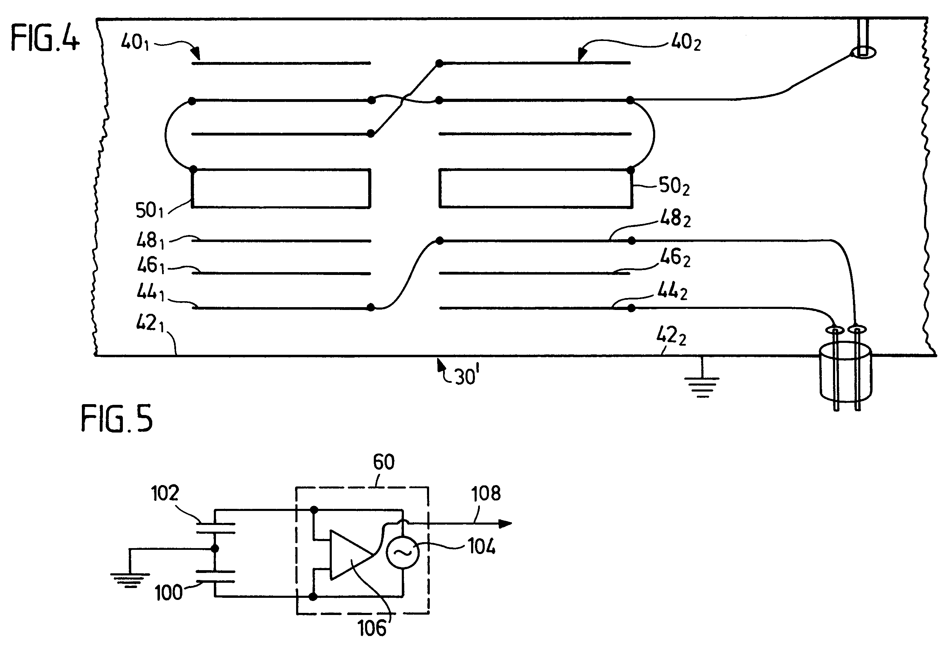

Bei einem zweiten Ausführungsbeispiel einer erfindungsgemäßen Meßvorrichtung zur Bestimmung des volumetrischen Gasgehalts, dargestellt in Fig. 4 und 5 ist der Mischer 20 identisch ausgebildet wie beim ersten Ausführungsbeispiel.

Allerdings ist die Kapazitätsmeßanordnung 30' insoweit anders ausgebildet, als diese zwei Sätze $40_1$ und $40_2$ von Ringelektroden aufweist, wobei diese Ringelektroden so miteinander verschaltet sind, daß sie zwei im Gegentakt zueinander betriebene Kondensatoranordnungen 100 und 102 bilden (Fig. 5).

Beispielsweise liegen gegenüber den auf Masse liegenden Ringelektroden $42_1$, $42_2$, $46_1$, $46_2$ und $50_1$, $50_2$ die Ringelektroden $44_2$ und $48_1$ auf einem negativen Potential und bilden mit den auf Masse liegenden Ringelektroden die erste Kondensatoranordnung 100, während die Ringelektroden $48_2$ und $44_1$ auf einem positiven Potential liegen und somit mit den auf Masse liegenden Ringelektroden die zweite Kondensatoranordnung 102 bilden, wobei, wie sich aus dem Schaltbild in Fig. 5 ergibt, die beiden Elektrodenanordnungen 100 und 102 im Gegentakt geschaltet und betrieben sind. Die Kapazitätsmeßeinrichtung 60 umfaßt ihrerseits beispielsweise eine Wechselspannungsquelle 104 und einen Meßverstärker 106, welcher die Spannung zwischen dem auf negativem Potential liegenden Anschluß der Kondensatoranordnung 100 und dem auf positivem Potential liegenden Anschluß der Kondensatoranordnung 102 mißt und über eine Ausgangsleitung 108 ein der Kapazität der Kondensatoranordnungen 100, 102 entsprechendes Signal liefert.

Durch die Gegentaktschaltung der beiden Kondensatoranordnungen 100 und 102 wird nun eine gegenüber Störungen verbessernde Meßtechnik zur Verfügung gestellt, welche eine exaktere Kapazitätsmessung erlaubt.

Im übrigen arbeitet aber auch das zweite Ausführungsbeispiel genauso wie das erste Ausführungsbeispiel, so daß hinsichtlich der Ausführungen zu den übrigen Elementen hierzu auf das erste Ausführungsbeispiel vollinhaltlich Bezug genommen werden kann.

**Patentansprüche**

1. Verfahren zur Ermittlung des volumetrischen Gasgehalts in einer eine Gasphase und eine Flüssigphase umfassenden Zweiphasenströmung eines Mediums mit unbekannter Strömungsform, **dadurch gekennzeichnet,** daß die Zweiphasenströmung durch Verwirbelung der Gasphase und der Flüssigphase in eine Tröpfchenströmung umgewandelt wird und daß in der Tröpfchenströmung die Bestimmung des volumetrischen Gasgehalts erfolgt.

2. Verfahren nach Anspruch 1, dadurch gekennzeichnet, daß die Bestimmung des volumetrischen Gasgehalts mittels einer Kapazitätsmessung durchgeführt wird.

3. Verfahren nach Anspruch 2, dadurch gekennzeichnet, daß bei der Kapazitätsmessung die effektive Permittivitätszahl von mehr als der Hälfte der gesamten Tröpfchenströmung bestimmt wird.

4. Verfahren nach Anspruch 3, dadurch gekennzeichnet, daß bei der Kapazitätsmessung die effektive Permittivitätszahl von im wesentlichen der gesamten Tröpfchenströmung bestimmt wird.

5. Verfahren nach einem der voranstehenden Ansprüche, dadurch gekennzeichnet, daß zur Kapazitätsmessung die Tröpfchenströmung in Teile aufgeteilt wird und daß die Teile der Tröpfchenströmung jeweils durch einen Kondensator hindurchgeführt werden.

6. Verfahren nach einem der voranstehenden Ansprüche, dadurch gekennzeichnet, daß zur Erzeugung der Tröpfchenströmung ein Mischer eingesetzt wird.

7. Verfahren nach Anspruch 6, dadurch gekennzeichnet, daß in dem Mischer die Flüssigphase mittels Strömungsleitschaufeln in Tröpfchen aufgelöst wird.

8. Meßvorrichtung zur Ermittlung des volumetrischen Gasgehalts in einer eine Gasphase und eine Flüssigphase umfassenden Zweiphasenströmung eines Mediums unbekannter Strömungsform, dadurch gekennzeichnet, daß die Meßvorrichtung einen Mischer (20) aufweist, welcher die Zweiphasenströmung durch Verwirbelung der Gasphase und der Flüssigphase in eine Tröpfchenströmung umwandelt und daß auf den Mischer (20) folgend eine Meßanordnung (30) zur Bestimmung des volumetrischen Gasgehalts der Tröpfchenströmung angeordnet ist.

9. Meßvorrichtung nach Anspruch 8, dadurch gekennzeichnet, daß die Meßanordnung zur Bestimmung des volumetrischen Gasgehalts der Tröpfchenströmung eine Kapazitätsmeßanordnung (30) ist, mit welcher eine effektive Permittivitätszahl der ein Zweiphasendielektrikum darstellenden Tröpfchenströmung meßbar ist.

10. Meßvorrichtung nach Anspruch 9, dadurch gekennzeichnet, daß die Kapazitätsmeßanordnung (30) von mehr als der Hälfte der Tröpfchenströmung durchströmt ist.

11. Meßvorrichtung nach Anspruch 10, dadurch gekennzeichnet, daß die Kapazitätsmeßanordnung (30) von der gesamten Tröpfchenströmung durchströmt ist.

12. Meßvorrichtung nach einem der Ansprüche 9 bis 11, dadurch gekennzeichnet, daß die Kapazitätsmeßanordnung (30) mehrere parallel geschaltete Kondensatoren aufweist und daß jeweils Teile der Tröpfchenströmung einen der Kondensatoren durchströmen.

13. Meßvorrichtung nach Anspruch 12, dadurch gekennzeichnet, daß die Kondensatoren durch einen Satz von in einer radialen Richtung zu einer Mittelachse (26) aufeinanderfolgend angeordneten Ringelektroden (42, 44, 46, 48, 50) gebildet sind.

14. Meßvorrichtung nach Anspruch 13, dadurch gekennzeichnet, daß die in der radialen Richtung aufeinanderfolgend angeordneten Ringelektroden (42, 44, 46, 48, 50) einen sukzessiv kleineren Radius aufweisen und daß alle Ringelektroden (42, 44, 46, 48, 50) koaxial zu der Mittelachse (26) angeordnet sind.

15. Meßvorrichtung nach Anspruch 13 oder 14, dadurch gekennzeichnet, daß die Ringelektroden (42, 44, 46, 48, 50) als Rohrzylinder ausgebildet sind.

16. Meßvorrichtung nach einem der Ansprüche 13 bis 15, dadurch gekennzeichnet, daß die einzelnen Ringelektroden (42, 44, 46, 48, 50) so miteinander verschaltet sind, daß diese parallel geschaltete Kondensatoren bilden.

17. Meßvorrichtung nach einem der Ansprüche 9 bis 16, dadurch gekennzeichnet, daß die Kapazitätsmeßanordnung (30) zwei in Strömungsrichtung (16) aufeinanderfolgend angeordnete Kondensatoranordnungen (100, 102) bilden und daß die Kondensatoranordnungen (100, 102) im Gegentakt betrieben sind.

18. Meßvorrichtung nach einem der Ansprüche 8 bis 17, dadurch gekennzeichnet, daß der Mischer (20) Strömungsleitschaufeln (22) aufweist, welche die Flüssigphase in Richtung der Mittelachse (26) beschleunigen und damit in Tröpfchen auflösen.

19. Meßvorrichtung nach Anspruch 18, dadurch gekennzeichnet, daß die Strömungsleitschaufeln (22) als Ausbiegungen aus einem Kanaleinsatz (24) ausgebildet sind.

FIG.1

FIG.2

FIG.3

EP 0 936 462 A2

FIG.4

FIG.5

EP 0 936 462 A2